# EUROPÄISCHE PATENTSCHRIFT

(11) **EP 4 285 101 B1**
(45) Veröffentlichungstag und Bekanntmachung des Hinweises auf die Patenterteilung: **01.04.2026**
(21) Anmeldenummer: 22702959.2
(22) Anmeldetag: 01.02.2022
(51) Int. Cl.: G01N 21/64, G01N 21/65, G01N 21/71, G01N 21/85, G01N 21/84

(54) **OPTISCHES UNTERSUCHEN VON OBJEKTEN EINES MATERIALSTROMS WIE BEISPIELSWEISE SCHÜTTGUT**
OPTICAL INSPECTION OF OBJECTS OF A MATERIAL STREAM, FOR EXAMPLE BULK MATERIAL
INSPECTION OPTIQUE D'OBJETS D'UN FLUX DE MATÉRIAU, PAR EXEMPLE MATÉRIAU EN VRAC

(30) Priorität: 01.02.2021 DE 102021200894
(43) Veröffentlichungstag der Anmeldung: 06.12.2023
(73) Patentinhaber: Fraunhofer-Gesellschaft zur Förderung der angewandten Forschung e.V., 80686 München (DE); Karlsruher Institut für Technologie, 76131 Karlsruhe (DE)
(72) Erfinder: BEYERER, Jürgen, 76131 Karlsruhe (DE); ZANDER, Tim, 76137 Karlsruhe (DE); HARTRUMPF, Matthias, 76131 Karlsruhe (DE); KRAUSE, Julius, 76131 Karlsruhe (DE); LÄNGLE, Thomas, 76131 Karlsruhe (DE); PALMER, Michael, 76131 Karlsruhe (DE); STRUCK, Günter, 76131 Karlsruhe (DE)
(74) Vertreter: Pfenning, Meinig & Partner mbB
(86) Internationale Anmeldenummer: PCT/EP2022/052259
(87) Internationale Veröffentlichungsnummer: WO 2022/162230

(56) Entgegenhaltungen:
- EP-B1- 0 696 236
- EP-B1- 3 122 479
- DE-A1- 4 426 475
- DE-B4- 102018 210 015
- US-B1- 9 785 851

## Beschreibung

Die Erfindung betrifft eine Vorrichtung zum optischen Untersuchen von Objekten eines Materialstroms, sowie ein entsprechendes Verfahren.

Beim optischen Untersuchen von Objekten in einem Materialstrom werden Objekte unterschiedlicher spektraler Reflektanz unterschieden, insbesondere unterschiedliche Bestandteile, Materialien, der jeweiligen Objekte erkannt. Es gibt hier zum einen die klassische Linienspektroskopie, bei welcher das Licht mithilfe dispersiver optischer Elemente innerhalb der Bildebene in seiner Wellenlängenbestandteile zerlegt wird. Nachteilig ist hier die hohe nötige Fertigungspräzision sowie die eindimensionale Objektauflösung. Es gibt auch multispektrale Kameras, die entweder zeitlich wechselnde Filter haben, oder aus einem Kamera-Array mit vorgesetzten Filtern bestehen oder welche statt der üblichen rot-grünblau (RGB) Filter-Arrays weitere Sensoren oder andere Filter-Arrays aufweisen.

Diese Lösungen weisen sämtlich eine mangelnde spektrale Auflösung auf und, damit hergehend, eine geringe Flexibilität. Die Kameras mit zeitlich wechselnden Filtern sind dabei zusätzlich aufgrund ihrer mechanischen Bauteile anfällig. Kamera-Arrays erzeugen durch die Vervielfachung der Sensordaten hohe Datenströme, was ebenfalls unvorteilhaft ist. In alternativen Verfahren wird eine zeitlich veränderbare Beleuchtung mit unterschiedlichen vorgegebenen Lichtspektren genutzt, um Teile der spektralen Reflektanz zu rekonstruieren. Nachteilig ist hier die erforderliche ständige Schaltung der Beleuchtung mit hoher Geschwindigkeit, welche einerseits die Wahl der verfügbaren Leuchtmittel und damit die möglichen Lichtspektren einschränkt und andererseits die Lebenszeit der Beleuchtung beschränkt bzw. die Geschwindigkeit der Messung limitiert.

Die DE 297 24 853 U1 beschreibt eine Vorrichtung zum Identifizieren und Sortieren von bandgeförderten Objekten, bei welchem ein Messpunkt in einer abtastenden Bewegung über die Objekte auf dem Förderband geführt wird, wobei durch ein optisches Erfassen der Objekte erreicht wird, dass unterschiedliche Objektmaterialien nur dort identifiziert werden, wo auch ein Objekt lokalisiert ist. Dem ähnlich sind auch aus der Qualitätssicherung bei der Tablettenproduktion Systeme bekannt, bei welchem Tabletten in Reihen und Zeilen geordnet auf einem sich getaktet bewegendem Fließband angeordnet sind und in einem Erfassungsbereich in den jeweiligen Bewegungspausen die einzelnen Tabletten mit einem Messstahl abgetastet werden. In der US 9 785 851 B1 wird ein System und ein Verfahren zum Sortieren von Schrottteilchen beschrieben, das die Abbildung eines sich bewegenden Förderers, der Schrottteilchen enthält, unter Verwendung eines Bildverarbeitungssystems zur Erzeugung eines Bildes umfasst. Zur Klassifizierung der Schrottteilchen wird ein Teil des Materials der Schrottteilchen durch Einstrahlung von Laserpulsen verdampft. Die resultierende Emissionsstrahlung wird spektroskopisch ausgewertet. In DE 44 26 475 A1 wird eine Anordnung und ein Verfahren zur Anwendung von Lasern in der Laserplasmaspektroskopie zur Materialerkennung bewegter Teile, die statistisch aufeinanderfolgen, beschrieben. Die EP 0 696 236 B1 beschreibt ein Verfahren und eine Vorrichtung zur Sortierung von Materialteilen.

Weiterhin ergibt sich durch die übliche Beleuchtung einer verhältnismäßig großen Fläche der Nachteil, dass ein ungünstiges Signal-Zu-Rauschverhältnis die Auswertung erschwert.

Es ergibt sich als Aufgabe, die geschilderten Nachteile der bekannten Vorrichtungen zum optischen Untersuchen von Objekten in einem Materialstrom zu überwinden.

Diese Aufgabe wird durch die Gegenstände der unabhängigen Patentansprüche gelöst.

Vorteilhafte Ausführungsformen ergeben sich aus den abhängigen Patentansprüchen, der Beschreibung und der Figur.

Ein Aspekt betrifft eine Vorrichtung zum optischen Untersuchen von Objekten eines Materialstroms, insbesondere zur optischen Spektroskopie von Objekten eines Materialstroms. Die Objekte können dabei bandgeförderte Objekte wie beispielsweise ein Schüttgut sein. Die Vorrichtung umfasst eine Lichtquelleneinrichtung, eine Nachverfolgungseinrichtung, eine Umlenkeinrichtung und eine Sensoreinrichtung mit einem optischen Sensor.

Die Lichtquelleneinrichtung ist ausgebildet zum Erzeugen eines zum optischen Untersuchen der Objekte des Materialstroms geeigneten Untersuchungslichtes. Im Rahmen der vorliegenden Offenbarung umfasst das optische Untersuchen sowohl ein Untersuchen im sichtbaren Bereich des Spektrums, als auch ein Untersuchen im Infrarot- oder Ultraviolett- oder auch Röntgenbereich. Entsprechend kann das Untersuchungslicht eine elektromagnetische Strahlung im Infrarotbereich, insbesondere im nahen Infrarotbereich, im sichtbaren Bereich, im ultravioletten Bereich oder auch im Röntgenbereich sein. Bevorzugt ist entsprechend vorgesehen, dass die spektralen Verteilungen des Untersuchungslichtes in einem Infrarotbereich und/oder in einem sichtbaren Bereich und/oder in einem Ultraviolettbereich liegen. Der Infrarotbereich kann dabei von 2200 nm bis 640 nm reichen, der sichtbare Bereich von 640 nm bis 380 nm und der Ultraviolettbereich von 380 nm bis 190 nm. Diese spektralen Verteilungen sind besonders vorteilhaft für das Klassifizieren von Objekten, insbesondere Schüttgut-Objekten.

Grundsätzlich lässt sich der im folgenden beschriebene Lösungsvorschlag auch auf ein nicht beanspruchtes akustisches Untersuchen übertragen, bei welchem die Lichtquelleneinrichtung durch eine geeignete Schallquelleneinrichtung ersetzt wird, welche entsprechend einen Untersuchungsschall, beispielsweise in Form eines gerichteten Schallkegels, erzeugt.

Die Nachverfolgungseinrichtung ist ausgebildet zum Nachverfolgen zumindest eines Objektes, das heißt eines oder mehrerer Objekte, des Materialstroms und zum Ausgeben einer entsprechenden Ortsinformation des nachverfolgten Objektes. Das Ausgeben der Ortsinformation erfolgt dabei bevorzugt wiederholt, insbesondere fortlaufend, entsprechend mit einer jeweiligen zeitlichen Auflösung, welche auch einstellbar sein kann. Das Nachverfolgen kann dabei mittels üblicher Methoden zur Objektnachverfolgung durchgeführt werden, beispielsweise nach der in den Patentschriften EP 3 122 479 B1 oder US 2020 388 042 A1 erläuterten Weise.

Die Umlenkeinrichtung ist ausgebildet zum Lenken des Untersuchungslichtes auf das nachverfolgte Objekt und/oder Lenken eines von dem nachverfolgten Objekt reflektierten Anteils des Untersuchungslichtes auf die Sensoreinrichtung mit dem optischen Sensor. Das Lenken erfolgt in beiden Fällen jeweils entsprechend der ausgegebenen Ortsinformationen. Es kann also gezielt mit dem Untersuchungslicht das nachverfolgte Objekt beleuchtet werden und dann der reflektierte Anteil des Untersuchungslichtes flächig, das heißt ortsunspezifisch, erfasst werden, oder umgekehrt der Materialstrom mit dem oder den Objekten flächig, das heißt ortsunspezifisch, beleuchtet werden und selektiv ausschließlich der von dem oder den nachverfolgten Objekten reflektierte Anteil des Untersuchungslichtes auf eine Sensoreinrichtung mit einem optischen Sensor gelenkt werden. Entsprechend können in diesen Fällen Lichtquelleneinrichtung und Umlenkeinrichtung gegenüber der Sensoreinrichtung oder aber Umlenkeinrichtung und Sensoreinrichtung gegenüber der Lichtquelleneinrichtung räumlich getrennt voneinander, das heißt insbesondere mit einem jeweils eigenen Gehäuse, ausgeführt werden.

Alternativ kann die Umlenkeinrichtung auch ausgebildet sein zugleich das Untersuchungslicht auf das nachverfolgte Objekt zu lenken und den, insbesondere nur den, von dem nachverfolgten Objekt Anteil des Untersuchungslichtes auf die Sensoreinrichtung mit dem optischen Sensor zu lenken. Das kann beispielsweise erreicht werden, indem sich die jeweiligen Strahlengänge zumindest teilweise überlappen, wie dies mit entsprechenden Strahlteilern realisiert werden kann. Derartige kombinierte Strahlgänge sind beispielsweise von den oben beschriebenen Systemen zur Qualitätskontrolle bei Tabletten bekannt, ausgewertet wird dann nur der Anteil des reflektierten Lichtes, welcher sich genau entlang dem abtastenden Lichtstrahl zurück einem entsprechenden Strahlenteiler und von dort zur Sensoreinrichtung fortpflanzt.

Das hat den Vorteil, dass gezielt die spektrale Information von Messpunkten beziehungsweise Messbereichen auf den bewegten Objekten erfasst werden kann, ohne dass eine flächige Erfassung erforderlich ist. Dadurch ist die aufkommende Datenmenge erheblich reduziert. Durch das Nachführen des Messstrahls in den Formen des Untersuchungslichtes beziehungsweise des zur Sensoreinrichtung weitergeleiteten reflektierten Anteils des Untersuchungslichtes wird auch ermöglicht, die jeweils erreichbare Messzeit variabel vorzugeben, sogar für unterschiedliche Messpunkte oder Messbereiche unterschiedlich lange. Dabei wird auch ein im Vergleich zu den üblichen Verfahren verbessertes Signal-zu-Rausch-Verhältnis der von der Sensoreinrichtung gelieferten Sensordaten erreicht, da weniger Streuverluste auftreten. Dies ermöglicht die Auswertung der von der Sensoreinrichtung erfassten Signale mit Verfahren, welche aufgrund eines vergleichsweise schlechten Wirkungsgrades in Kombination mit bekannten Vorrichtungen zum optischen Untersuchen von Objekten eines Materialstroms nicht zum Einsatz kommen. Derartige Verfahren umfassen beispielsweise eine Ramanspektroskopie und/oder eine Fluoreszenzspektroskopie und/oder eine Flureszenz-Lebensdauer-Analyse und/oder eine laserinduzierte Plasmaspektroskopie und/oder ein auf einer besonders genauen Polarisationserfassung basierendes Untersuchen der Objekte.

Erfindungsgemäß ist vorgesehen, dass die Lichtquelleneinrichtung eine oder mehrere Punkt-Lichtquellen, insbesondere Laser-Punkt-Lichtquellen, umfasst, mittels welchen ein jeweiliger Messbereich, insbesondere ein jeweiliger Messpunkt, auf dem oder den Objekten mit dem Untersuchungslicht beleuchtbar ist.

Der Messbereich bzw. Messpunkt ist dabei insbesondere kleiner gleich dem Objekt, beispielsweise höchstens halb so groß wie das Objekt selber. Das Untersuchungslicht wird somit auf einen Teilbereich der Oberfläche des Objektes, den entsprechenden Messbereich bzw. Messpunkt, gelenkt. Die jeweiligen Punkt-Lichtquellen können dabei auch Untersuchungslicht jeweils einer oder mehreren unterschiedlichen spektralen Verteilungen, das heißt Wellenlängen bzw. Wellenlängenverteilungen, zugeordnet sein. Das hat den Vorteil, dass besonders genaue Messungen realisiert werden können.

Erfindungsgemäß ist vorgesehen, dass die Umlenkeinrichtung ausgebildet ist, das Untersuchungslicht konsekutiv auf zumindest zwei, also zwei oder mehr als zwei unterschiedliche Messbereiche bzw. Messpunkte auf dem nachverfolgten Objekt zu lenken. Das hat den Vorteil, dass die Objekte des Materialstroms besonders genau und flexibel untersucht werden können.

Es kann hier weiterhin vorgesehen sein, dass die Umlenkeinrichtung ausgebildet ist, das Untersuchungslicht für eine jeweils individuell vorgehbare Messzeit auf hier zumindest zwei unterschiedlichen Messbereiche oder Messpunkte auf dem oder den nachverfolgten Objekten zu lenken. Insbesondere können die jeweiligen Messzeiten hier voneinander verschieden sein. Bevorzugt betragen die Messzeiten hier mehr als eine Millisekunde, insbesondere mehr als drei Millisekunden und besonders bevorzugt mehr als fünf Millisekunden. Dies trägt zur weiter gesteigerten Genauigkeit des optischen Untersuchens bei. Beispielweise ist so ein Untersuchungsszenario denkbar, bei welchem zunächst mehrere unterschiedliche Messbereiche kurzzeitig mit dem Untersuchungslicht beleuchtet werden, und sodann eine Untermenge der kurzzeitig beleuchteten Messbereiche für eine genauere Untersuchung nochmals länger mit dem Untersuchungslicht beleuchtet werden können. Für die unterschiedlichen Messbereiche oder auch die unterschiedlichen Messungen in den gleichen Messbereichen können dabei, wie im Folgenden geschildert, auch unterschiedliche Wellenlängen des Untersuchungslichtes genutzt werden, was weiterhin eine genauere Untersuchung des oder der Objekte erlaubt.

So kann das Untersuchungslicht nämlich in einer weiteren vorteilhaften Ausführungsform zumindest drei unterschiedliche Wellenlängen, das heißt unterschiedliche Wellenlängenpeaks, insbesondere zumindest acht unterschiedliche Wellenlängen oder Wellenlängenpeaks aufweisen. Die spektrale Verteilung des Untersuchungslichtes kann also zumindest drei verschiedene Scheitelpunkte oder Maxima bzw. zumindest acht verschiedene Scheitelpunkte oder Maxima aufweisen, was verkürzt als unterschiedliche Wellenlängen bezeichnet wird. Das Untersuchungslicht kann somit ein multispektrales bzw. hyperspektrales Untersuchungslicht sein bzw. als solches bezeichnet werden. Damit lassen sich Objekte in dem Materialstrom nochmals genauer untersuchen.

In einer weiteren vorteilhaften Ausführungsform ist vorgesehen, dass die Umlenkeinrichtung einen Spiegelgalvanometer und/oder einen Strahlteiler umfasst. Damit lässt sich das Untersuchungslicht besonders schnell und genau auf die jeweiligen Messbereiche lenken, die Kombination mit einem Strahlteiler erlaubt das Führen des Untersuchungslichtes und des reflektierten Anteils des Untersuchungslichtes, der zum optischen Sensor gelenkt wird, wie oben beschrieben im selben Strahlengang, was eine besonders kompakte Konstruktion ermöglicht.

In einer anderen vorteilhaften Ausführungsform ist vorgesehen, dass die Umlenkeinrichtung eine Blendeneinheit aufweist, welche ausgebildet ist, nur den von den nachverfolgten Objekt reflektierten Anteil des Untersuchungslichtes auf die Sensoreinrichtung zu lenken, das heißt zu dieser durchzulassen, welcher von dem oder den vorgegebenen Messbereichen auf dem Objekt reflektiert ist. Die Blendeneinheit realisiert damit einen dynamischen Filter für den reflektierten Anteil des Untersuchungslichtes. Das hat den Vorteil, dass die Lichtquelleneinrichtung auch eine Flächen-Lichtquelle nutzen kann, welche nicht nur den jeweiligen Messbereich, sondern das Objekt und gegebenenfalls sogar eine Umgebung des Objektes in dem Materialstrom beleuchtet und dennoch die genannten Vorteile erreicht werden.

In einer weiteren vorteilhaften Ausführungsform ist vorgesehen, dass die Nachverfolgungseinrichtung ausgebildet ist, das oder die Objekte basierend auf einem Bewegungsmodell, insbesondere einem erlernten Bewegungsmodell, nachzuverfolgen, insbesondere auch außerhalb eines Erfassungsbereiches der Nachverfolgungseinrichtung, welche für das jeweils nachverfolgte Objekt gültig ist. Die Nachverfolgungseinrichtung kann also ausgebildet sein, anhand der erfassten Bewegung eines Objektes in einem Erfassungsbereich auch dessen Bewegung außerhalb des Erfassungsbereiches vorherzusagen, und entsprechende Ortsinformationen, welche einen Ort außerhalb des Erfassungsbereiches betreffen, auszugeben. Das Nachverfolgen, insbesondere das Bewegungsmodell, kann dabei eine vorgegebene oder einstellbare Fördergeschwindigkeit einer (insbesondere Band-) Fördereinrichtung als Parameter nutzen. Das hat den Vorteil einer besonders genauen Nachverfolgung, sowie der flexiblen Anordnung der Nachverfolgungseinrichtung relativ zur Lichtquelleneinrichtung und Umlenkeinrichtung.

In einer weiteren vorteilhaften Ausführungsform ist vorgesehen, dass das oder die nachverfolgten Objekte bewegte Objekte sind, welche während des Nachverfolgens und des Lenkens des Untersuchungslichtes auf das jeweilige Objekt und/oder des Lenkens des reflektierten Anteils des Untersuchungslichtes auf die Sensoreinrichtungen in Bewegung sind. Das hat den Vorteil, dass eine Bewegung der Objekte für das optische Untersuchen nicht unterbrochen werden muss, das heißt der Materialstrom nicht unterbrochen werden muss.

In einer weiteren vorteilhaften Ausführungsform weist die Vorrichtung die (insbesondere Band-) Fördereinrichtung zum Befördern und damit Bewegen der mit dem Untersuchungslicht beleuchteten Objekte auf. Die Vorrichtung kann des Weiteren auch eine Analyseeinrichtung zum Analysieren eines von dem optischen Sensor in Abhängigkeit von dem durch den optischen Sensor erfassten reflektierten Anteil des Untersuchungslichtes erzeugten elektrischen oder elektronischen Signals aufweisen.

Ein weiterer Aspekt betrifft ein Verfahren zum optischen Untersuchen eines Materialstroms von Objekten, insbesondere zur optischen Spektroskopie eines Materialstroms von Objekten, mit den folgenden Verfahrensschritten:
- Erzeugen eines zum optischen Untersuchen der Objekte das Materialstroms geeigneten Untersuchungslichtes mit einer Lichtquelleneinrichtung, die eine oder mehrere Punkt-Lichtquellen, insbesondere Laser-Punkt-Lichtquellen, umfasst, mittels welchen ein jeweiliger Messbereich, insbesondere Messpunkt, auf dem Objekt mit dem Untersuchungslicht beleuchtet wird;
- Nachverfolgen zumindest eines Objektes;
- Ausgeben einer Ortsinformation des nachverfolgten Objektes;
- Lenken des Untersuchungslichtes auf das nachverfolgte Objekt oder Lenken eines von dem nachverfolgten Objekt reflektierten Anteils des Untersuchungslichtes auf eine Sensoreinrichtung mit einem optischen Sensor, mittels einer Umlenkeinrichtung (5), entsprechend der ausgegebenen Ortsinformationen.

Dabei wird erfindungsgemäß das Untersuchungslicht mittels der Umlenkeinrichtung konsekutiv auf zumindest zwei unterschiedliche Messbereiche, insbesondere Messpunkte, auf dem nachverfolgten Objekt gelenkt.

Vorteile und vorteilhafte Ausführungsformen des Verfahrens entsprechen hier Vorteilen und vorteilhaften Ausführungsformen der Vorrichtung und umgekehrt.

Das optische Untersuchen kann eine Ramanspektroskopie und/oder eine Fluoreszenzspektroskopie und/oder eine Flureszenz-Lebensdauer-Analyse und/oder eine laserinduzierte Plasmaspektroskopie des Materialstroms sein oder umfassen. Dies ist aufgrund des erreichbaren erhöhten Signal-zu-Rausch-Verhältnisses besonders vorteilhaft.

Anhand der in der nachfolgenden Figur gezeigten schematischen Zeichnung soll der erfindungsgemäße Gegenstand näher erläutert werden, ohne diesen auf die hier gezeigten spezifischen Ausführungsformen einschränken zu wollen.

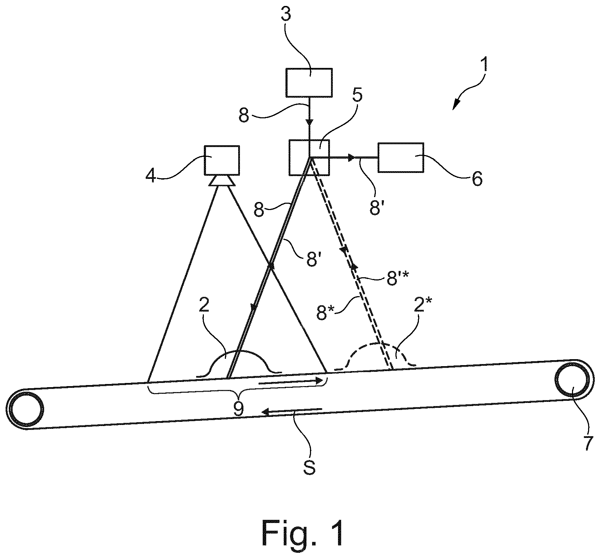

Dabei zeigt Fig. 1 eine beispielhafte Ausführung einer Vorrichtung zum optischen Untersuchen eines Materialstroms von Objekten.

Die Vorrichtung 1 zum optischen Untersuchen von Objekten 2 eines Materialstroms weist im gezeigten Beispiel eine Lichtquelleneinrichtung 3, eine Nachverfolgungseinrichtung 4, eine Umlenkeinrichtung 5, eine Sensoreinrichtung 6, sowie hier auch eine beispielhaft als Bandfördereinrichtung ausgeführte Fördereinrichtung 7 auf. Die Lichtquelleneinrichtung 3 dient dem Erzeugen eines zum optischen Untersuchen der Objekte 2 des Materialstroms geeigneten Untersuchungslichtes 8. Die Nachverfolgungseinrichtung 4 dient dem Nachverfolgen des zumindest einen Objektes 2 und Ausgeben einer entsprechenden Ortsinformation des nachverfolgten Objektes 2 an die Umlenkeinrichtung 5, insbesondere an eine der Umlenkeinrichtung 5zugeordnete Steuereinheit. Die Umlenkeinrichtung 5 wiederum ist hier ausgebildet zum Lenken des Untersuchungslichtes 8 auf das entsprechende nachverfolgte Objekt 2, und im vorliegenden Beispiel auch zum Lenken eines von dem nachverfolgten Objekt 2 reflektierten Anteils 8' des Untersuchungsanteils 8 auf die Sensoreinrichtung 6. Dafür weist die Umlenkeinrichtung 5 vorliegend einen entsprechend gesteuerten Spiegelgalvanometer und einen Strahlteiler auf.

In Fig. 1 ist das Objekt 2 dabei zur Illustration als Objekt 2* auch zu einem späteren Zeitpunkt, zu welchem das Objekt gegenüber dem Ort zum Zeitpunkt des Erfassens durch die Nachverfolgungseinrichtung 4 bewegt wurde. Entsprechend ist das durch die Umlenkeinrichtung 5 nachgeführte Untersuchungslicht als Untersuchungspflicht 8* bzw. dass der reflektierte Anteil zum späteren Zeitpunkt als reflektierter Anteil 8'* gekennzeichnet. Festzuhalten ist hier, dass sich das Objekt 2 zum späteren Zeitpunkt außerhalb eines Erfassungsbereichs 9 der Nachverfolgungseinrichtung 4 befindet, und durch die Nachverfolgungseinrichtung 4 vorliegend dennoch nachverfolgt werden kann, da das gewählte Nachverfolgungsverfahren der Nachverfolgungseinrichtung 4, beispielsweise basierend auf einem Bewegungsmodell für das Objekt 2, auch eine entsprechende Vorhersage für ein Bewegen des Objektes 2 außerhalb des Erfassungsbereichs 9 ermöglicht. Dieses Bewegungsmodell kann dabei von der Fördergeschwindigkeit s der Fördereinrichtung 7 abhängen.

## Patentansprüche

1. Vorrichtung (1) zum optischen Untersuchen von Objekten (2) eines Materialstroms, insbesondere zur optischen Spektroskopie von Objekten (2) eines Materialstroms, mit
- einer Lichtquelleneinrichtung (3) zum Erzeugen eines zum optischen Untersuchen der Objekte (2) des Materialstroms geeigneten Untersuchungslichtes (8, 8*), wobei die Lichtquelleneinrichtung (3) eine oder mehrere Punkt-Lichtquellen, insbesondere Laser-Punkt-Lichtquellen, umfasst, mittels welchen ein jeweiliger Messbereich, insbesondere Messpunkt, auf dem Objekt (2) mit dem Untersuchungslicht (8, 8*) beleuchtbar ist;
- einer Nachverfolgungseinrichtung (4) zum Nachverfolgen zumindest eines Objektes (2) des Materialstroms und Ausgeben einer Ortsinformation des nachverfolgten Objektes (2);
- einer Sensoreinrichtung (6) mit einem optischen Sensor; und
- einer Umlenkeinrichtung (5) zum, entsprechend der ausgegebenen Ortsinformation, Lenken des Untersuchungslichtes (8, 8*) auf das nachverfolgte Objekt (2) oder Lenken eines von dem nachverfolgten Objekt (2) reflektierten Anteils (8', 8'*) des Untersuchungslichtes (8, 8*) auf die Sensoreinrichtung (6);
**dadurch gekennzeichnet, dass** die Umlenkeinrichtung (5) ausgebildet ist, das Untersuchungslicht (8, 8*) konsekutiv auf zumindest zwei unterschiedliche Messbereiche, insbesondere Messpunkte, auf dem nachverfolgten Objekt (2) zu lenken.

2. Vorrichtung (1) nach dem vorhergehenden Anspruch,
**dadurch gekennzeichnet, dass**
die Umlenkeinrichtung (5) ausgebildet ist, das Untersuchungslicht (8, 8*) für eine jeweils individuell vorgebbare Messzeit auf die zumindest zwei unterschiedlichen Messbereiche oder Messpunkte auf dem nachverfolgten Objekt (2) zu lenken, insbesondere für voneinander verschiedene Messzeiten

3. Vorrichtung (1) nach einem der vorhergehenden Ansprüche,
**dadurch gekennzeichnet, dass**
das Untersuchungslicht (8, 8*) zumindest drei unterschiedliche Wellenlängen, insbesondere zumindest acht unterschiedliche Wellenlängen aufweist.

4. Vorrichtung (1) nach einem der vorhergehenden Ansprüche,
**dadurch gekennzeichnet, dass**
die Umlenkeinrichtung (5) ein Spiegelgalvanometer und/oder einen Strahlteiler umfasst.

5. Vorrichtung (1) nach einem der vorhergehenden Ansprüche,
**dadurch gekennzeichnet, dass**
die Umlenkeinrichtung (5) eine Blendeneinheit aufweist, welche ausgebildet ist nur den von dem nachverfolgten Objekt (2) reflektierten Anteil (8', 8'*) des Untersuchungslichtes (8, 8*) auf die Sensoreinrichtung (6) zu lenken, welcher von zumindest einem vorgegebenen Messbereich auf dem Objekt (2) reflektiert ist.

6. Vorrichtung (1) nach einem der vorhergehenden Ansprüche,
**dadurch gekennzeichnet, dass**
die Nachverfolgungseinrichtung (4) ausgebildet ist, das oder die Objekte (2) basierend auf einem Bewegungsmodell, insbesondere einem erlernten Bewegungsmodell, nachzuverfolgen, insbesondere auch außerhalb eines Erfassungsbereiches (9) der Nachverfolgungseinrichtung (4) für das jeweils nachverfolgte Objekt (2).

7. Vorrichtung (1) nach einem der vorhergehenden Ansprüche,
**dadurch gekennzeichnet, dass**
das oder die nachverfolgten Objekte (2) bewegte Objekte (2) sind, welche während des Nachverfolgens und des Lenkens des Untersuchungslichtes (8, 8*) auf das jeweilige Objekt (2) und des Lenkens des reflektierten Anteils (8', 8'*) des Untersuchungslichtes (8, 8*) auf die Sensoreinrichtung (6) in Bewegung sind.

8. Vorrichtung (1) nach einem der vorhergehenden Ansprüche,
**gekennzeichnet durch**
eine Fördereinrichtung (7) zum Befördern der mit dem Untersuchungslicht (8, 8*) beleuchteten Objekte (2).

9. Verfahren zum optischen Untersuchen eines Materialstroms von Objekten (2), insbesondere zur optischen Spektroskopie eines Materialstroms von Objekten (2), mit
- einem Erzeugen eines zum optischen Untersuchen der Objekte (2) des Materialstroms geeigneten Untersuchungslichtes (8, 8*) mit einer Lichtquelleneinrichtung (3), die eine oder mehrere Punkt-Lichtquellen, insbesondere Laser-Punkt-Lichtquellen, umfasst, mittels welchen ein jeweiliger Messbereich, insbesondere Messpunkt, auf dem Objekt (2) mit dem Untersuchungslicht (8, 8*) beleuchtet wird;
- einem Nachverfolgen zumindest eines Objektes (2);
- einem Ausgeben einer Ortsinformation des nachverfolgten Objektes (2);
- einem Lenken des Untersuchungslichtes (8, 8*) auf das nachverfolgte Objekt (2) oder Lenken eines von dem nachverfolgten Objekt (2) reflektierten Anteils (8', 8'*) des Untersuchungslichtes (8, 8*) auf eine Sensoreinrichtung (6) mit einem optischen Sensor, mittels einer Umlenkeinrichtung (5), entsprechend der ausgegebenen Ortsinformation,
**dadurch gekennzeichnet, dass** das Untersuchungslicht (8, 8*) mittels der Umlenkeinrichtung (5) konsekutiv auf zumindest zwei unterschiedliche Messbereiche, insbesondere Messpunkte, auf dem nachverfolgten Objekt (2) gelenkt wird.

10. Verfahren nach dem vorhergehenden Anspruch,
**dadurch gekennzeichnet, dass**
das optische Untersuchen eine Ramanspektroskopie und/oder eine Fluoreszenzspektroskopie und/oder eine Flureszenz-Lebensdauer-Analyse und/oder eine laserinduzierte Plasmaspektroskopie des Materialstroms ist oder umfasst.

## Claims

1. A device (1) for optically examining objects (2) in a material flow, in particular for the optical spectroscopy of objects (2) in a material flow, comprising
- a light source device (3) for generating an examination light suitable for optically examining the objects (2) in the material flow (8, 8*), the light source device (3) comprising one or more point light sources, in particular laser point light sources, by means of which a respective measurement range, in particular a measurement point, on the object (2) can be illuminated with the examination light (8, 8*);
- a tracking device (4) for tracking at least one object (2) of the material flow and providing location information of the tracked object (2);
- a sensor device (6) with an optical sensor; and
- a deflection device (5) for directing the examination light (8, 8*) onto the tracked object (2) in accordance with the provided location information or for directing a portion (8', 8'*) of the examination light (8, 8*) reflected by the tracked object (2) onto the sensor device (6);
**characterised in that**
the deflection device (5) is configured to direct the examination light (8, 8*) consecutively onto at least two different measurement ranges, particularly measurement points, on the tracked object (2).

2. The device (1) according to the preceding claim,
**characterised in that**
the deflection device (5) is configured to direct the examination light (8, 8*) onto the at least two different measurement ranges or measurement points on the tracked object (2) for a respective individually predefinable measurement time, in particular for measurement times that differ from one another.

3. The device (1) according to any of the preceding claims,
**characterised in that**
the examination light (8, 8*) has at least three different wavelengths, in particular at least eight different wavelengths.

4. The device (1) according to any of the preceding claims,
**characterised in that**
the deflection device (5) comprises a mirror galvanometer and/or a beam splitter.

5. The device (1) according to any of the preceding claims,
**characterised in that**
the deflection device (5) has an aperture unit which is configured to direct only that portion (8', 8'*) of the examination light (8, 8*) reflected by the tracked object (2) onto the sensor device (6) which is reflected from at least one predetermined measurement range on the object (2).

6. The device (1) according to any of the preceding claims,
**characterised in that**
the tracking device (4) is configured to track the object or objects (2) based on a motion model, in particular a learned motion model, especially outside a detection range (9) of the tracking device (4) for the respective tracked object (2).

7. The device (1) according to any of the preceding claims,
**characterised in that**
the tracked object or objects (2) are moving objects (2) which are in motion during the tracking and the directing of the examination light (8, 8*) onto the respective object (2) and the directing of the reflected portion (8', 8'*) of the examination light (8, 8*) onto the sensor device (6).

8. The device (1) according to any of the preceding claims,
**characterised by**
a conveying device (7) for conveying the objects (2) illuminated by the examination light (8, 8*).

9. A method for optically examining a material flow of objects (2), in particular for the optical spectroscopy of a material flow of objects (2), by
- generating an examination light (8, 8*) suitable for optically examining the objects (2) of the material flow, using a light source device (3) comprising one or more point light sources, in particular laser point light sources, by means of which a respective measurement range, in particular a measurement point, on the object (2) is illuminated with the examination light (8, 8*);
- tracking at least one object (2);
- providing location information of the tracked object (2);
- directing the examination light (8, 8*) onto the tracked object (2) or directing a portion (8', 8'*) of the examination light (8, 8*) reflected by the tracked object (2) onto a sensor device (6) with an optical sensor, by means of a deflection device (5), corresponding to the provided location information,
**characterised in that**
the examination light (8, 8*) is directed by means of the deflection device (5) consecutively onto at least two different measurement ranges, in particular measurement points, on the tracked object (2).

10. The method according to the preceding claim,
**characterised in that**
the optical examination is or comprises a Raman spectroscopy and/or a fluorescence spectroscopy and/or a fluorescence lifetime analysis and/or a laser-induced plasma spectroscopy of the material flow.

## Revendications

1. Dispositif (1) pour l'inspection optique d'objets (2) d'un flux de matériau, en particulier pour la spectroscopie optique d'objets (2) d'un flux de matériau, avec
- un équipement de source lumineuse (3) pour générer une lumière d'inspection (8, 8*) appropriée pour l'inspection optique des objets (2) du flux de matériau, dans lequel l'équipement de source lumineuse (3) comprend une ou plusieurs sources lumineuses ponctuelles, en particulier des sources lumineuses ponctuelles à laser, au moyen desquelles une zone de mesure respective, en particulier un point de mesure, sur l'objet (2) peut être éclairée avec la lumière d'inspection (8, 8*) ;
- un équipement de suivi (4) pour suivre au moins un objet (2) du flux de matériau et délivrer une information spatiale de l'objet (2) suivi ;
- un équipement de détection (6) avec un capteur optique ; et
- un équipement de déviation (5) pour, en fonction de l'information spatiale délivrée, guider la lumière d'inspection (8, 8*) sur l'objet (2) suivi ou guider une partie (8', 8'*) de la lumière d'inspection (8, 8*) réfléchie par l'objet (2) suivi sur l'équipement de détection (6) ;
**caractérisé en ce que**
l'équipement de déviation (5) est réalisé pour guider la lumière d'inspection (8, 8*) de manière consécutive sur au moins deux zones de mesure différentes, en particulier des points de mesure, sur l'objet (2) suivi.

2. Dispositif (1) selon la revendication précédente,
**caractérisé en ce que**
l'équipement de déviation (5) est réalisé pour guider la lumière d'inspection (8, 8*) sur les au moins deux zones de mesure différentes ou points de mesure sur l'objet (2) suivi pendant un temps de mesure pouvant être prédéfini respectivement individuellement, en particulier pendant des temps de mesure différents les uns des autres.

3. Dispositif (1) selon l'une quelconque des revendications précédentes,
**caractérisé en ce que**
la lumière d'inspection (8, 8*) présente au moins trois longueurs d'onde différentes, en particulier au moins huit longueurs d'onde différentes.

4. Dispositif (1) selon l'une quelconque des revendications précédentes,
**caractérisé en ce que**
l'équipement de déviation (5) comprend un galvanomètre à miroir et/ou un séparateur de faisceau.

5. Dispositif (1) selon l'une quelconque des revendications précédentes,
**caractérisé en ce que**
l'équipement de déviation (5) présente une unité de diaphragme, qui est réalisée pour ne guider sur l'équipement de détection (6) que la partie (8', 8'*) de la lumière d'inspection (8, 8*) réfléchie par l'objet (2) suivi, qui est réfléchie par au moins une zone de mesure prédéfinie sur l'objet (2).

6. Dispositif (1) selon l'une quelconque des revendications précédentes,
**caractérisé en ce que**
l'équipement de suivi (4) est réalisé pour suivre le ou les objets (2) en se basant sur un modèle de mouvement, en particulier un modèle de mouvement appris, en particulier également en dehors d'une zone d'acquisition (9) de l'équipement de suivi (4) pour l'objet (2) suivi respectivement.

7. Dispositif (1) selon l'une quelconque des revendications précédentes,
**caractérisé en ce que**
le ou les objets (2) suivis sont des objets (2) mobiles qui sont en mouvement pendant le suivi et le guidage de la lumière d'inspection (8, 8*) sur l'objet (2) respectif et le guidage de la partie (8', 8'*) réfléchie de la lumière d'inspection (8, 8*) sur l'équipement de détection (6).

8. Dispositif (1) selon l'une quelconque des revendications précédentes,
**caractérisé par**
un équipement de transport (7) pour transporter les objets (2) éclairés avec la lumière d'inspection (8, 8*).

9. Procédé pour l'inspection optique d'un flux de matériau d'objets (2), en particulier pour la spectroscopie optique d'un flux de matériau d'objets (2), avec
- une génération d'une lumière d'inspection (8, 8*) appropriée pour l'inspection optique des objets (2) du flux de matériau avec un équipement de source lumineuse (3) qui comprend une ou plusieurs sources lumineuses ponctuelles, en particulier des sources lumineuses ponctuelles à laser, au moyen desquelles une zone de mesure respective, en particulier un point de mesure, sur l'objet (2) est éclairée avec la lumière d'inspection (8, 8*) ;
- un suivi d'au moins un objet (2) ;
- une délivrance d'une information spatiale de l'objet (2) suivi ;
- un guidage de la lumière d'inspection (8, 8*) sur l'objet (2) suivi ou guidage d'une partie (8', 8'*) de la lumière d'inspection (8, 8*) réfléchie par l'objet (2) suivi sur un équipement de détection (6) avec un capteur optique, au moyen d'un équipement de déviation (5), en fonction de l'information spatiale délivrée,
**caractérisé en ce que**
la lumière d'inspection (8, 8*) est guidée au moyen de l'équipement de déviation (5) de manière consécutive sur au moins deux zones de mesure différentes, en particulier points de mesure, sur l'objet (2) suivi.

10. Procédé selon la revendication précédente,
**caractérisé en ce que**
l'inspection optique est ou comprend une spectroscopie Raman et/ou une spectroscopie de fluorescence et/ou une analyse de durée de vie de fluorescence et/ou une spectroscopie de plasma induite par laser du flux de matériau.
